# EUROPEAN PATENT APPLICATION

(11) **EP 4 685 375 A1**
(43) Date of publication of application: **28.01.2026**
(21) Application number: 23928626.3
(22) Date of filing: 22.03.2023
(51) Int. Cl.: F16K 51/00

(54) **VALVE DEVICE**

(71) Applicant: Hitachi Construction Machinery Co., Ltd., Tokyo 110-0015 (JP)
(72) Inventor: KODAMA, Hirotaka, Tsuchiura-shi, Ibaraki 300-0013 (JP); OKAMURA, Jun, Tsuchiura-shi, Ibaraki 300-0013 (JP); KAMIYA, Hiroki, Tsuchiura-shi, Ibaraki 300-0013 (JP); ANDOU, Masakazu, Tsuchiura-shi, Ibaraki 300-0013 (JP); KAWASUMI, Shohei, Tsuchiura-shi, Ibaraki 300-0013 (JP); OOTORI, Atsushi, Tsuchiura-shi, Ibaraki 300-0013 (JP); TANABE, Junichi, Tsuchiura-shi, Ibaraki 300-0013 (JP)
(74) Representative: MERH-IP Matias Erny Reichl Hoffmann Patentanwälte PartG mbB
(86) International application number: PCT/JP2023/011198
(87) International publication number: WO 2024/195045

(57) **Abstract**

A solenoid valve (1) includes a sleeve (22), a spool (23), and a filter (31). The filter (31) has a first filter (32) and a second filter (33). The first filter (32) is wound on an outer peripheral surface of the sleeve (22), with part of the outer peripheral surface in the circumferential direction exposed. The second filter (33) is wound around the first filter (32) on the outer peripheral side, with both ends (33A, 33B) in the circumferential direction secured to a portion defined on the outer peripheral surface of the sleeve (22) and exposed from the first filter (32).

## Description

### TECHNICAL FIELD

The present disclosure relates to a valve device incorporated in a hydraulic circuit of a construction machine such as a hydraulic excavator and a wheel loader, for example.

### BACKGROUND ART

In recent years, there has been a growing demand for automatic operation of construction machines, typically hydraulic excavators, resulting in such construction machines further electrically controlled. Known methods for electrically controlling construction machines include, for example, operating control valves for controlling actuators of a construction machine (hydraulic cylinder, hydraulic motor) with hydraulic forces controlled by a solenoid valve. Meanwhile, Patent Document 1 discloses the use of a solenoid valve accelerating or decelerating the valve timing in an engine. The solenoid valve disclosed in the Patent Document 1 includes a port of a sleeve (valve sleeve) covered with a filter.

### PRIOR ART DOCUMENT

### PATENT DOCUMENT

Patent Document 1: Japanese Patent Laid-Open No. 2006-022816 A

### SUMMARY OF THE INVENTION

The solenoid valve described in Patent Document 1 includes one single filter wound around a sleeve on the outer peripheral side at a position corresponding to a port. As a remedy, a plurality of filters can be wound around a sleeve on the outer peripheral side to ensure the filter strength or improve the filtering property of the filters. However, the configuration of winding a plurality of filters in an overlapped manner makes it hard to stably secure each of the filters.

An object of the present invention is to provide a valve device capable of stably mounting a plurality of filters on a sleeve.

A valve device according to the present invention preferably includes: a sleeve provided with a port and a valve body hole communicating with the port; a valve body inserted into the valve body hole of the sleeve and axially moving in the valve body hole; and a filter wound around the sleeve on the outer peripheral side in a circumferential direction at a position corresponding to the port, characterized in that the filter has a first filter wound on an outer peripheral surface of the sleeve, with part of the outer peripheral surface in the circumferential direction exposed, and whose both ends in the circumferential direction are secured on the outer peripheral surface of the sleeve and a second filter wound around the first filter on the outer peripheral side, and whose both ends in the circumferential direction are secured to a portion defined on the outer peripheral surface of the sleeve and exposed from the first filter between the both ends of the first filter in the circumferential direction.

According to the present invention, the plurality of filters can stably be mounted on the sleeve.

### BRIEF DESCRIPTION OF THE DRAWINGS

Fig. 1 is a perspective view showing a valve device (solenoid valve) according to an embodiment.
FIG. 2 is a cross-sectional view showing the valve device assembled in a control valve.
FIG. 3 is a partial cross-sectional view showing a valve portion of the valve device.
Fig. 4 is an enlarged cross-sectional view of a (IV) portion in Fig. 3.
Fig. 5 is a front elevation view showing a sleeve with a first filter secured thereto.
Fig. 6 is a front elevation view showing the sleeve with the first filter and a second filter secured thereto.
Fig. 7 is a cross-sectional view of the first filter, the sleeve, a spool and the like, viewed along arrows VII-VII in Fig. 5.
Fig. 8 is a cross-sectional view of the first filter, the second filter, the sleeve, the spool and the like, viewed along arrows VIII-VIII in Fig. 6.
Fig. 9 is an explanation diagram showing the first filter and the second filter deployed.
Fig. 10 is a cross-sectional view showing a first filter, a second filter, a sleeve, a spool, and the like, similarly located as in Fig. 8, according to a first modification.
Fig. 11 is a cross-sectional view showing a filter, similarly located as in Fig. 4, according to a second modification.
Fig. 12 is a half sectional view showing a valve device (relief valve) according to a third modification.

### MODE FOR CARRYING OUT THE INVENTION

Hereinafter, a valve device according to one embodiment of the present disclosure will be described in detail with reference to the accompanying drawings, taking as an example of a case where the disclosure is applied to a solenoid valve incorporated in a hydraulic circuit of a construction machine.

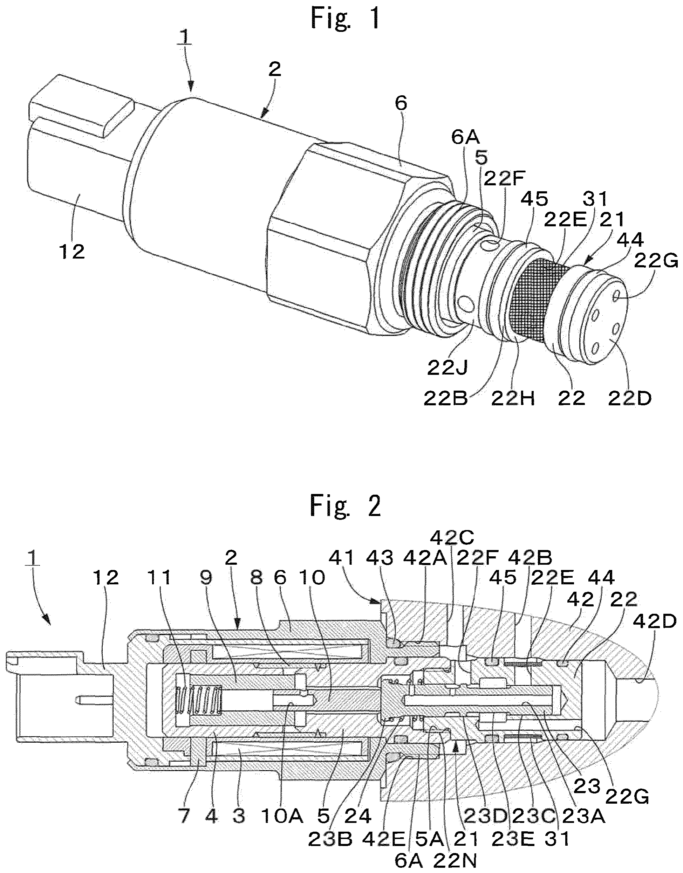

Figs. 1 to 9 each show an embodiment of the present invention. In Figs. 1 and 2, a solenoid valve 1, serving as a valve device, is configured as a solenoid valve. The solenoid valve 1 opens and closes a passage by allowing a plunger 9 of a solenoid portion 2 to axially drive a spool 23 of a valve portion 21. The solenoid valve 1 is assembled in a control port portion of equipment controlling the flow and pressure of a control fluid (for example, hydraulic oil). For example, as shown in Fig. 2, the solenoid valve 1 is assembled in a control valve 41 of a representative type of hydraulic excavator (not shown) of a construction machine. In this case, the solenoid valve 1 is mounted on a housing 42 of the control valve 41, for example.

The control valve 41 of the hydraulic excavator is a collection of control valves (control valve device) composed of a plurality of directional control valves. The control valve 41 of the hydraulic excavator distributes pressurized oil discharged from a hydraulic pump (not shown) to a plurality of hydraulic actuators (hydraulic cylinder, hydraulic motor) such as a boom cylinder, an arm cylinder, a bucket cylinder, a traveling hydraulic motor and a revolving hydraulic motor (each not shown) in response to the operation of a traveling lever/pedal and an operating lever (each not shown) operated by an operator. The solenoid valve 1 opens and closes a passage, based upon the supply of power from a controller (not shown) controlling the solenoid valve 1. This configuration allows the solenoid valve 1 to control pilot pressurized oil displacing (moving) a spool (not shown) of the control valve 41.

As shown in Figs. 1 to 3, the solenoid valve 1 includes the solenoid portion 2 as an actuator and a valve portion 21 driven by the solenoid portion 2. The solenoid valve 1 is configured as a pressure control valve (proportional solenoid valve) of three-port and two-position allowing the solenoid portion 2 to switch the valve portion 21. The solenoid portion 2 and the valve portion 21 are coaxially disposed.

First, the solenoid portion 2 will be described. As shown in Fig. 2, the solenoid portion 2 includes a coil 3, a housing 4 as a stator, an anchor 5, a yoke 6, an abutting member 7 and a connecting member 8, the plunger 9 as a movable element, an operating pin 10, a spring 11 and a socket 12. The coil 3 is configured by an annularly looped conductive wire. The coil 3 generates magnetic forces with external power supply (power distribution). The housing 4 is formed as a bottomed cylinder. The housing 4 is disposed on the inner peripheral side of the coil 3. The housing 4 extends in the axial direction of the coil 3, and opens on the one end side in the axial direction (the right end side in Fig. 2). The connecting member 8 is fixed to the one end side of the housing 4.

The anchor 5 is formed as a cylinder whose both ends in the axial direction are open. The anchor 5 is provided on the one side of the plunger 9 in the movement direction (the right side in Fig. 2). A sleeve 22 of the valve portion 21 is mounted on the one end side in the axial direction of the anchor 5 (the right end side in Fig. 2). That is, a female screw 5A is formed on the inner periphery of the one end side of the anchor 5. A male screw 22N of the sleeve 22 is threadedly engaged with the female screw 5A of the anchor 5. Meanwhile, the other end side of the anchor 5 (the left end side in Fig. 2) axially extends on the inner peripheral side of the coil 3 toward the housing 4. The connecting member 8 is fixed to the other end side of the anchor 5 (the left end side in Fig. 2).

The yoke 6 is formed as a cylinder whose both ends in the axial direction are open. The yoke 6 is disposed on the radially outer side of the housing 4 and the anchor 5. The one end side in the axial direction of the yoke 6 (the right end side in Fig. 2) is mounted on the housing 42 of the control valve 41. That is, a male screw 6A is formed on the outer periphery on the one end side of the yoke 6. The male screw 6A of the yoke 6 is threadedly engaged with a female screw 42E of a control port portion 42A provided in the housing 42 of the control valve 41. In addition, the yoke 6 is fitted to the inner periphery of the one end side of the yoke 6. That is, an inner peripheral surface on the one end side of the yoke 6 and an outer peripheral surface on the one end side of the anchor 5 are abutted.

Meanwhile, the other end side of the yoke 6 (the left end side in Fig. 2) axially extends on the outer peripheral side of the coil 3 toward the socket 12. The yoke 6 is a magnetic member forming a magnetic circuit (magnetic path) over the inner peripheral side and the outer peripheral side of the coil 3 together with the housing 4. In this case, the abutting member 7 located between the inner periphery of the yoke 6 and the outer periphery of the housing 4 and constituting the magnetic circuit between the yoke 6 and the housing 4 is disposed on the other end side of the yoke 6. The inner periphery of the abutting member 7 entirely abuts the outer periphery of the housing 4, and part of the outer periphery of the abutting member 7 in a circumferential direction abuts the inner periphery of the yoke 6. Thus, the yoke 6 and the housing 4 can receive and provide magnetic fluxes therebetween.

The connecting member 8 is formed as a cylinder whose both ends in the axial direction are open. The connecting member 8 is configured by a non-magnetic material. The connecting member 8 has the one side in the axial direction (the right side in Fig. 2) fixed to the anchor 5 and the other side in the axial direction (the left side in Fig. 2) fixed to the housing 4. The plunger 9 is formed as a cylinder whose both ends in the axial direction are open. The plunger 9 is provided movably in the axial direction of the coil 3. That is, the plunger 9 is disposed within the housing 4, and axially movable between the housing 4 and the anchor 5. The operating pin 10 is fixed to the plunger 9. The operating pin 10 moves together with the plunger 9. The operating pin 10 transmits thrust forces acting on the plunger 9 to the spool 23 of the valve portion 21.

The spring 11 is provided between a bottom portion of the housing 4 and the plunger 9. The spring 11 presses the operating pin 10 toward the spool 23 via the plunger 9 such that one end of the operating pin 10 (right end in Fig. 2) is not spaced apart from other end of the spool 23 (left end in Fig. 2). A cable (not shown) supplying power to the coil 3 of the solenoid portion 2 is connected to the socket 12. The coil 3 excites or demagnetizes the anchor 5 by the supply of power to allow the plunger 9 to approach or be spaced apart from the anchor 5. This mechanism allows the solenoid portion 2 (plunger 9) to axially drive the spool 23 of the valve portion 21.

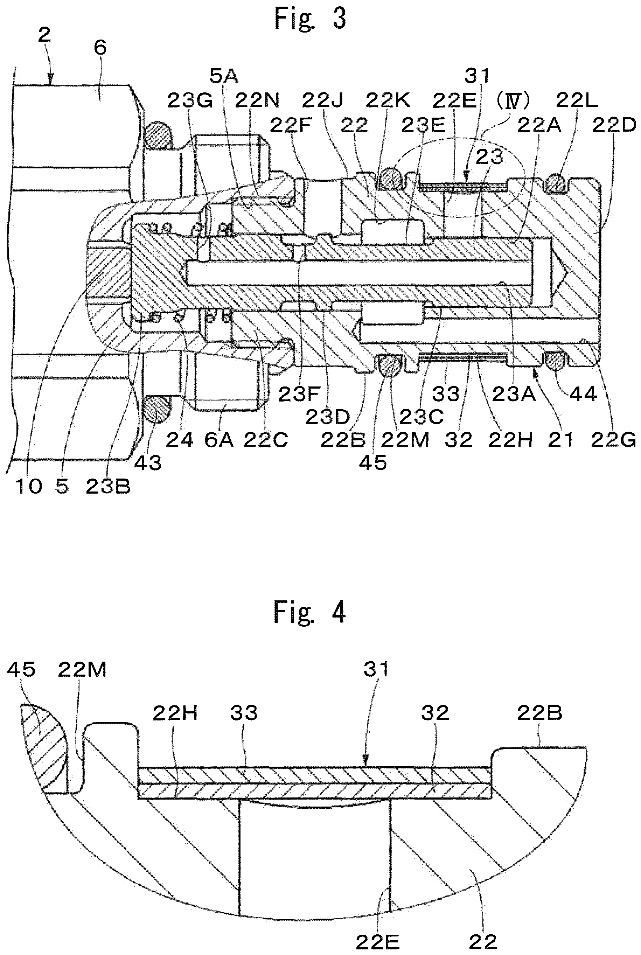

Subsequently, the valve portion 21 will be described. As shown in Figs. 2 and 3, the valve portion 21 includes the sleeve 22 as a valve sleeve, the spool 23 as a valve body and a return spring 24. As shown in Fig. 2, the valve portion 21 is mounted on the housing 42 of the control valve 41 together with the solenoid portion 2. That is, the housing 42 of the control valve 41 is provided with the control port portion 42A on which the solenoid valve 1 is mounted. The control port portion 42A is provided with the female screw 42E located on the opening side.

The valve portion 21 is inserted into the control port portion 42A. The valve portion 21 and the solenoid portion 2 are fixed to the housing 42 of the control valve 41 by threadedly engaging the male screw 6A of the solenoid portion 2 with the female screw 42E of the control port portion 42A. That is, the solenoid valve 1 is fixed to the housing 42 of the control valve 41 by threadedly engaging the male screw 6A of the solenoid portion 2 with the female screw 42E of the control port portion 42A. A seal ring 43 (O ring) is provided between an inner peripheral surface of the control port portion 42A and an outer peripheral surface of the valve portion 21 for sealing a gap between these surfaces.

As shown in Figs. 2 and 3, the sleeve 22 is formed as a bottomed cylinder. That is, the sleeve 22 is provided with a sliding bore 22A as a valve body hole into which the spool 23 is slidably inserted. The sleeve 22 has a large-diameter cylinder portion 22B located on the one side in the axial direction (the right side in Figs. 2 and 3), a small-diameter cylinder portion 22C located on the other side in the axial direction (the left side in Figs. 2 and 3), and a bottom portion 22D closing the one end side of the large-diameter cylinder portion 22B. Accordingly, the sleeve 22 is formed as a bottomed and stepped cylinder extending in the axial direction. The sleeve 22 has an end portion opposite the solenoid portion 2 (one end portion) closed by the bottom portion 22D.

The large-diameter cylinder portion 22B is provided with a pump port 22E allowing a control fluid to pass therethrough, a tank port 22F and an actuator port 22G. The pump port 22E as a supply port is formed at the large-diameter cylinder portion 22B as an oil passage extending in the radial direction of the large-diameter cylinder portion 22B. The pump port 22E has the one side that is open on the outer diameter side of the large-diameter cylinder portion 22B and the other side that is open to the sliding bore 22A. An opening on the one side of the pump port 22E is open at an annular recessed portion 22H provided on an outer peripheral surface of the large-diameter cylinder portion 22B.

The annular recessed portion 22H is formed on the outer peripheral surface of the large-diameter cylinder portion 22B as an entire-circumferential recessed groove, with an outer diameter dimension reduced with respect to axially adjacent parts. The pump port 22E is connected to a hydraulic pump (not shown), for example, a pilot pump of a hydraulic excavator via a pump oil passage 42B provided in the housing 42 of the control valve 41. As later described, the annular recessed portion 22H to which the pump port 22E is open is provided with a filter 31 so as to cover the opening of the pump port 22E.

The tank port 22F serving as a drain port is also formed at the large-diameter cylinder portion 22B as an oil passage extending in the radial direction of the large-diameter cylinder portion 22B. The tank port 22F is located to be closer on the small-diameter cylinder portion 22C side than the pump port 22E. The tank port 22F has the one side that is open on the outer diameter side of the large-diameter cylinder portion 22B and the other side that is open to the sliding bore 22A. An opening on the one side of the tank port 22F is open at an annular recessed portion 22J provided on the outer peripheral surface of the large-diameter cylinder portion 22B.

The annular recessed portion 22J is formed on the outer peripheral surface of the large-diameter cylinder portion 22B as an entire-circumferential recessed groove, with an outer diameter dimension reduced with respect to axially adjacent parts. The tank port 22F is connected to a tank (not shown), for example, a hydraulic oil tank of a hydraulic excavator via a tank oil passage 42C provided in the housing 42 of the control valve 41.

The actuator port 22G serving as an output port is formed at the large-diameter cylinder portion 22B as an oil passage extending in the axial direction of the large-diameter cylinder portion 22B. The actuator port 22G has the one side that is open at the bottom portion 22D and the other side that is open to the sliding bore 22A. An opening on the other side of the actuator port 22G is open at an annular recessed portion 22K provided on an inner peripheral surface of the sliding bore 22A. The annular recessed portion 22K is formed within the sliding bore 22A as an entire-circumferential recessed groove, with an inner diameter dimension increased with respect to axially adjacent parts.

The annular recessed portion 22K is located between the pump port 22E and the tank port 22F. The actuator port 22G is connected to a hydraulic actuator (not shown), for example, a hydraulic pilot chamber of a control valve (directional control valve) of a hydraulic excavator via an actuator oil passage 42D provided in the housing 42 of the control valve 41.

Also, seal grooves 22L, 22M, each serving as an entire circumferential groove, are provided at two positions on the outer peripheral surface of the large-diameter cylinder portion 22B. That is, the tip end side seal groove 22L on which a tip end side seal ring 44 (O ring) is mounted is provided on the tip end side (on the bottom portion 22D side) of the large-diameter cylinder portion 22B. The base end side seal groove 22M on which a base end side seal ring 45 (O ring) is mounted is provided between the pump port 22E and the tank port 22F on the base end side of the large-diameter cylinder portion 22B (on the small-diameter cylinder portion 22C side).

The tip end side seal ring 44 seals a gap between the actuator port 22G (the actuator oil passage 42D) and the pump port 22E (the pump oil passage 42B). The base end side seal ring 45 seals a gap between the pump port 22E (the pump oil passage 42B) and the tank port 22F (the tank oil passage 42C).

The small-diameter cylinder portion 22C of the sleeve 22 is fixed to the anchor 5 of the solenoid portion 2. That is, the male screw 22N is formed on the outer periphery of the small-diameter cylinder portion 22C. The male screw 22N of the small-diameter cylinder portion 22C is threadedly engaged with the female screw 5A provided on the anchor 5 of the solenoid portion 2. This configuration can integrally connect the valve portion 21 and the solenoid portion 2, with the spool 23 inserted into the sleeve 22.

The spool 23 is provided in the sliding bore 22A of the sleeve 22. The spool 23 can axially move in the sliding bore 22A. The spool 23 is formed as an elongate bar-shaped member axially and extends on the inner peripheral side of the sleeve 22. An axial passage 23A extending axially is formed at an axis center position of the spool 23.

A flange portion 23B projecting radially outwardly over the entire circumference is provided on the other end side of the spool 23 in the axial direction (the left end side in Figs. 2 and 3). The flange portion 23B faces an end face of the small-diameter cylinder portion 22C of the sleeve 22 (opening side end face). The return spring 24 is provided between the flange portion 23B of the spool 23 and the small-diameter cylinder portion 22C of the sleeve 22.

The spool 23 is pressed on the anchor 5 side of the solenoid portion 2 with biasing forces acting on the return spring 24. For example, other end face of the spool 23 abuts an end face of the anchor 5 with biasing forces acting on the return spring 24 in a non-urged state where the coil 3 of the solenoid portion 2 is not powered. In this state, one end face of the operating pin 10 abuts the other end face of the spool 23 with the spring 11 of the solenoid portion 2. That is, even with the solenoid portion 2 in the non-urged state, the spring 11 of the solenoid portion 2 maintains the abutting of the other end face of the spool 23 and the one end face of the operating pin 10.

Lands 23C, 23D are provided on an outer peripheral surface of the spool 23 to be spaced apart in the axial direction. In the state where the other end portion of the spool 23 (other end face) abuts the anchor 5 of the solenoid portion 2 (non-urged state), the pump port 22E and the actuator port 22G are shut off by the land 23C to communicate the actuator port 22G and the tank port 22F with each other via a small diameter section 23E between the lands 23C, 23D. In this case, the pressurized oil in the actuator oil passage 42D is introduced to the tank oil passage 42C via the actuator port 22G and the tank port 22F to return to a tank (hydraulic oil tank; not shown).

On the other hand, the coil 3 of the solenoid portion 2, when powered, allows the spool 23 to move via the plunger 9 and the operating pin 10 to the one side in the axial direction (the right side in Figs. 2 and 3) against biasing forces acting on the return spring 24. At this time, that is, in the state where the spool 23 has axially moved to the one side in the axial direction, the pump port 22E and the actuator port 22G communicate with each other via the small diameter section 23E between the lands 23C, 23D, and the actuator port 22G and the tank port 22F are shut off by the land 23D. In this case, the pressurized oil in the pump oil passage 42B is introduced to the actuator oil passage 42D via the pump port 22E and the actuator port 22G and supplied to a hydraulic actuator (hydraulic pilot chamber of control valve; not shown).

The spool 23 is provided with radial passages 23F, 23G radially penetrating to be spaced apart in the axial direction. Each of the radial passages 23F, 23G communicates with the axial passage 23A. This configuration allows the tank (hydraulic oil tank) to lead to the inner peripheral side of the anchor 5 of the solenoid portion 2 via the tank port 22F, the radial passage 23F, the axial passage 23A, and the radial passage 23G. Further, the inner peripheral side of the anchor 5 leads to the plunger 9 between the inner periphery of the anchor 5 and the outer periphery of the operating pin 10, and through the passage 10A provided in the operating pin 10. Accordingly, the inside of the solenoid portion 2 is configured to lead to the tank via the valve portion 21 (the inside of the spool 23).

In fact, the solenoid valve above described in Patent Document 1 includes one single filter wound around a sleeve on the outer peripheral side at a position corresponding to a port. As a remedy, a plurality of filters can be wound around a sleeve on the outer peripheral side to ensure the filter strength against deformation or improve the filtering property of the filters. However, the configuration of winding two or three filters only may lead to unstable mounting of the filters on the sleeve. In particular, when filters having various degrees of fineness are secured to a sleeve by welding or adhesive bonding, for example, the filters overlap differently, depending on securing locations, without any approach, resulting in easily unstable securing state.

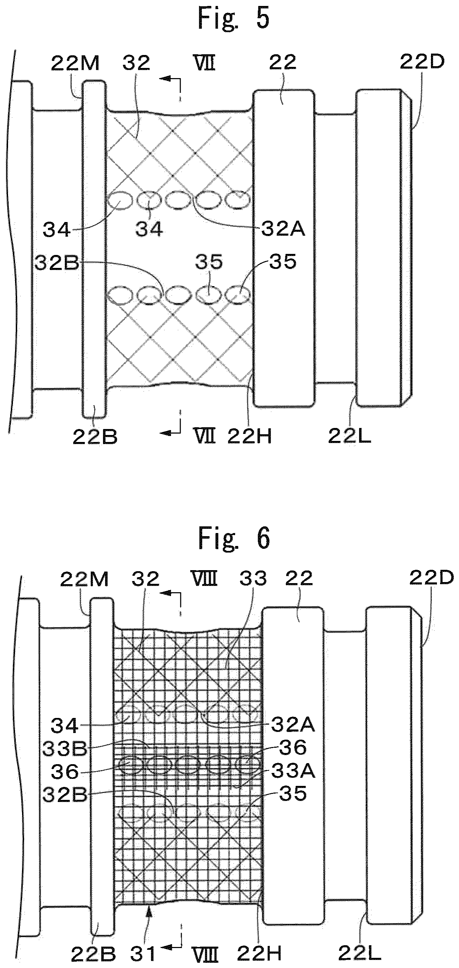

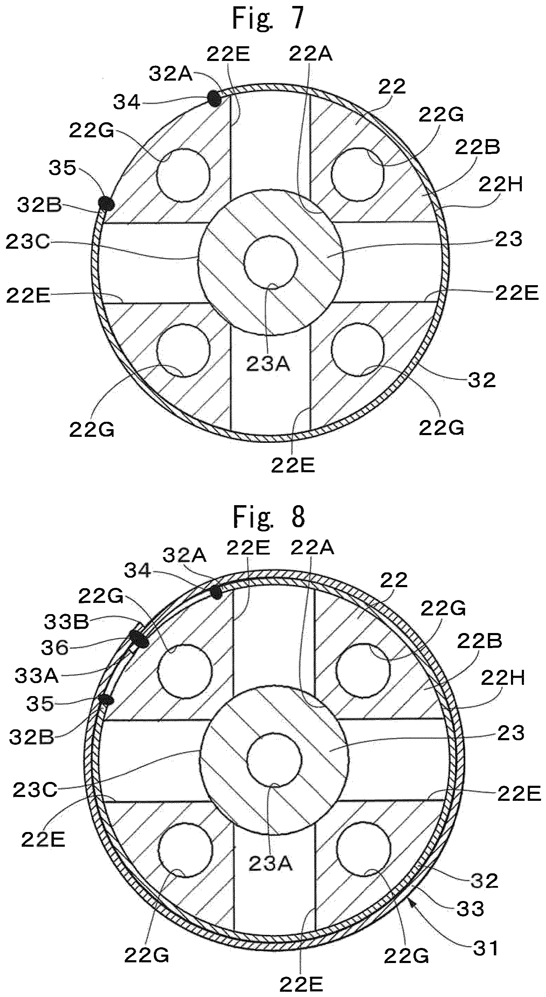

As a remedy, according to an embodiment, the filter 31 is configured to include two filters 32, 33, that is, the first filter 32 located on the radially inner side and the second filter 33 located on the radially outer side. In this case, as shown in Fig. 7, the first filter 32 is wound on the outer periphery of the sleeve 22 in the form of a broken ring (C-shaped). That is, as shown in Fig. 5, the first filter 32 is wound on an outer peripheral surface of the sleeve 22, with part of the outer peripheral surface of the sleeve 22 in the circumferential direction exposed.

More specifically, with the first filter 32 wound on the outer peripheral surface of the sleeve 22 (a bottom surface of the annular recessed portion 22H), both ends 32A, 32B in the circumferential direction face each other to be spaced apart in the circumferential direction. Thus, the outer peripheral surface of the sleeve 22 between the one end 32A and the other end 32B of the first filter 32 in the circumferential direction is exposed from the first filter 32.

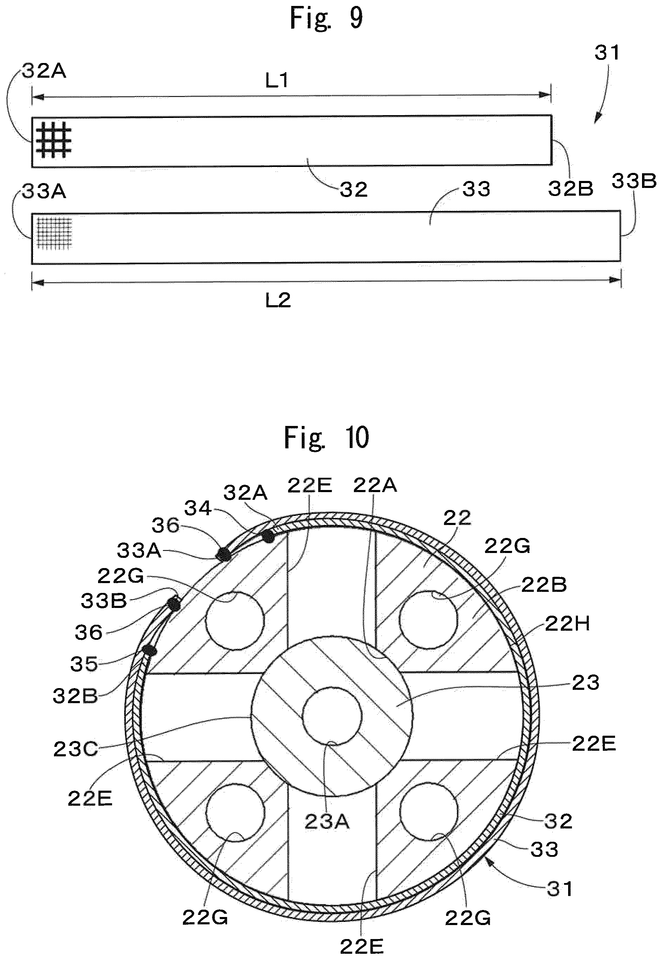

Based upon this configuration, as shown in Figs. 6 to 8, the second filter 33 is wound on the radially outer side of the first filter 32 in an annular shape (O-shaped) on the outer periphery of the first filter 32. The second filter 33 may be wound in a broken ring (C-shaped), as in a first modification shown in Fig. 10. In either case, both ends 33A, 33B of the second filter 33 in the circumferential direction are secured to a portion defined on the outer peripheral surface of the sleeve 22 and exposed from the first filter 32 between the both ends 32A, 32B of the first filter 32 in the circumferential direction (i.e., a portion uncovered with the first filter 32). This process allows both of the first filter 32 and the second filter 33 to stably be secured on the outer peripheral surface of the sleeve 22 in the embodiment. This approach will be described.

First, in the embodiment, the solenoid valve 1 as a valve device includes the sleeve 22, the spool 23 as a valve body and the filter 31. The sleeve 22 is provided with the ports 22E, 22F, 22G and the sliding bore 22A as a valve body hole communicating with the ports 22E, 22F, 22G. The spool 23 is inserted into the sliding bore 22A of the sleeve 22. The spool 23 axially moves in the sliding bore 22A. In this case, the spool 23 is displaced with respect to the sleeve 22 by the solenoid portion 2 as an electrically driven actuator.

The filter 31 is provided around the sleeve 22 on the outer peripheral side at a position corresponding to the pump port 22E. In this case, the filter 31 is provided within the annular recessed portion 22H to which the pump port 22E is open. The filter 31 is wound around the sleeve 22 in the circumferential direction within the annular recessed portion 22H. In the embodiment, the filter 31 has the first filter 32 and the second filter 33.

The first filter 32 is wound on the outer peripheral surface of the sleeve 22 (the bottom surface of the annular recessed portion 22H), with part of the outer peripheral surface in the circumferential direction exposed. That is, with the first filter 32 wound on the outer peripheral surface of the sleeve 22, the both ends 32A, 32B in the circumferential direction face each other to be spaced apart in the circumferential direction. The both ends 32A, 32B of the first filter 32 in the circumferential direction are secured on the outer peripheral surface of the sleeve 22.

Thus, with the first filter 32 secured on the outer peripheral surface of the sleeve 22, a portion defined on the outer peripheral surface of the sleeve 22 and between the one end 32A and the other end 32B of the first filter 32 in the circumferential direction is exposed. That is, the one end 32A and the other end 32B of the first filter 32 in the circumferential direction are not superimposed radially on the outer peripheral surface of the sleeve 22. Accordingly, as shown in Fig. 7, the first filter 32 has a cross-sectional shape in a broken ring (C-shaped).

Based upon this configuration, the second filter 33 is wound around the first filter 32 on the outer peripheral side. In this case, as shown in Figs. 6 and 8, the second filter 33 has the both ends 33A, 33B in the circumferential direction secured between the both ends 32A, 32B of the first filter 32 in the circumferential direction on the outer peripheral surface of the sleeve 22. This configuration allows the both ends 33A, 33B of the second filter 33 in the circumferential direction to be secured to a portion defined on the outer peripheral surface of the sleeve 22 and exposed from the first filter 32.

In this case, the second filter 33 is wound entirely on the outer peripheral surface of the sleeve 22 on the radially outer side of the first filter 32. That is, the second filter 33 is wound on the outer periphery of the first filter 32 in an annular shape (O-shaped). In other words, the one end 33A and the other end 33B of the second filter 33 in the circumferential direction are radially superimposed on the outer peripheral surface of the sleeve 22. This configuration allows the second filter 33 to have a cross-sectional shape in an annular shape (O-shaped), as shown in Fig. 8.

The first filter 32 and the second filter 33 are each secured on the outer peripheral surface of the sleeve 22 by welding. That is, the one end 32A of the first filter 32 in the circumferential direction is secured on the outer peripheral surface of the sleeve 22 (the bottom surface of the annular recessed portion 22H) by a spot welding 34. The other end 32B of the first filter 32 in the circumferential direction is secured on the outer peripheral surface of the sleeve 22 (the bottom surface of the annular recessed portion 22H) by a spot welding 35, while being spaced apart in the circumferential direction with respect to the one end 32A (in other words, while facing the one end 32A across a gap in the circumferential direction with the one end 32A). The second filter 33 is secured on the outer peripheral surface of the sleeve 22 (the bottom surface of the annular recessed portion 22H) by a spot welding 36, with the both ends 33A, 33B radially overlapping each other. The spot weldings 34, 35, 36 correspond to portions for securing the filter 31 (the first filter 32, the second filter 33).

Fig. 9 shows the state where the first filter 32 and the second filter 33 are deployed, that is, the state prior to the filters 32 and 33 being wound on the outer peripheral surface of the sleeve 22 (the bottom surface of the annular recessed portion 22H). As shown in Fig. 9, a length dimension L1 of the first filter 32 is shorter than a length dimension L2 of the second filter 33. The length dimension L1 of the first filter 32 is shorter than a length of the outer peripheral surface of the sleeve 22 in the circumferential direction, more specifically, a length of the outer periphery of the annular recessed portion 22H.

Thus, with the first filter 32 wound within the annular recessed portion 22H, the both ends 32A, 32B of the first filter 32 in the circumferential direction face each other across a gap in the circumferential direction. On the other hand, the length dimension L2 of the second filter 33 is longer than the length of the outer peripheral surface of the sleeve 22 in the circumferential direction, more specifically, the length of the outer periphery of the annular recessed portion 22H. Therefore, with the second filter 33 wound within the annular recessed portion 22H, the both ends 33A, 33B of the second filter 33 in the circumferential direction are radially superimposed.

In addition, the first filter 32 and the second filter 33 are each configured by a mesh filter. In this case, the first filter 32 is coarser and has higher strength against deformation than the second filter 33. Conversely, the second filter 33 is finer and has lower strength against deformation than the first filter 32. Herein, the fineness of the second filter 33 (for example, filtering property, filtering precision) is set according to the size of trapped particles (contaminants) in the hydraulic oil, pressure loss and the like. The first filter 32 is coarser than such the second filter 33.

That is, the first filter 32 has a lower filtering property (filtering precision) and a smaller pressure loss than the second filter 33. For example, assuming that the particle diameter of trapped particles (contaminants) by the second filter 33 is 1, the particle diameter of trapped particles (contaminants) by the first filter 32 is 2 to 5 (more preferably, 4 to 5). For example, assuming that the pressure loss of the second filter 33 is 1, the pressure loss of the first filter 32 is 0.2 to 0.4 (more preferably, 0.25 or less).

In addition, the strength of the first filter 32 can be determined so as to assure the strength for both of the first filter 32 and the second filter 33 as necessary. In this case, assuming that the strength of the second filter 33 is 1, the strength of the first filter 32 is 15 to 25 (more preferably, 20 or more). The thickness of a filter element (component member) of the first filter 32 can be larger than the thickness of a filter element (component member) of the second filter 33. In this case, assuming that the thickness of the filter element of the second filter 33 is 1, the thickness of the filter element of the first filter 32 is 2 to 5 (more preferably, 2.5 or more). Further, the first filter 32 may be made of a different filter element material from the second filter 33.

Because of these properties, in the embodiment, the first filter 32 serves as a reinforcing filter reinforcing the second filter 33 on the inner diameter side of the second filter 33. On the other hand, the second filter 33 serves as a filter preventing foreign objects from passing through the hydraulic oil on the radially outer side of the first filter 32 as a reinforcing filter. That is, hydraulic oil (control fluid) flows from the pump oil passage 42B side to the pump port 22E provided with the first filter 32 and the second filter 33.

Accordingly, the upstream pressure of the second filter 33 is higher than the downstream pressure of the first filter 32, and the resulting difference between these pressures (differential pressure) generates pressing forces from the second filter 33 side to the first filter 32. The second filter 33, which is a mesh filter having fine component members (filter element), receives forces based upon differential pressures to excessively deform, and its filtering property can be deteriorated or the filter can be damaged. On the other hand, the first filter 32 has higher strength against deformation than the second filter 33. This advantage allows the first filter 32 to reduce deformation of the second filter 33 and suppress damage to the second filter 33. Accordingly, with the filtering property of the second filter 33 ensured, the second filter 33 can stably be mounted.

The solenoid valve 1 of the embodiment is configured as described, and subsequently, the operation of the solenoid valve 1 will be described.

First, the solenoid valve 1 is connected to a controller (not shown) controlling the solenoid valve 1. That is, a plug of a cable (not shown) extending from the controller is connected to the socket 12 of the solenoid valve 1. When the coil 3 of the solenoid portion 2 is not powered, the spool 23 of the valve portion 21 is urged on the solenoid portion 2 side by the return spring 24 and the other end face of the spool 23 abuts one end face of the solenoid portion 2 (anchor 5). This configuration allows the pump port 22E and the actuator port 22G of the sleeve 22 to be shut off and the actuator port 22G and the tank port 22F to be held in the state of communication with each other (initial state) .

When the coil 3 is powered by the controller, the coil 3 generates a magnetic field (excitation forces) to allow the anchor 5 to suck in the plunger 9 with suction power, depending on current values of the power supplied to the coil 3. At this time, the plunger 9 moves to the anchor 5 side within the housing 4. Thereafter, the plunger 9 will stop at a position where hydraulic forces acting on the spool 23, spring forces acting on the return spring 24 and suction power on the anchor 5 are in a balanced state.

The displacement of the plunger 9 is transmitted to the spool 23 via the operating pin 10 to move the spool 23 in the sliding bore 22A of the sleeve 22. This mechanism allows the pump port 22E and the actuator port 22G of the sleeve 22 to communicate with each other and the actuator port 22G and the tank port 22F to be shut off.

Accordingly, pressurized oil is supplied to a hydraulic actuator (for example, a hydraulic pilot chamber of a directional control valve) via the solenoid valve 1. At this time, the hydraulic oil passing through the filter 31 (the first filter 32 and the second filter 33) radially inwardly from the outside of the sleeve 22 flows into the pump port 22E. When the powering for the coil 3 stops, the magnetic field generated by the coil 3 disappears and the resulting spring forces acting on the return spring 24 put back the spool 23 to the initial state.

Herein, in the embodiment, the second filter 33 is wound around the first filter 32 on the outer peripheral side, with the both ends 33A, 33B in the circumferential direction secured on the outer peripheral surface of the sleeve 22 (the bottom surface of the annular recessed portion 22H). In this case, the both ends 33A, 33B of the second filter 33 in the circumferential direction are secured between the both ends 32A, 32B of the first filter 32 in the circumferential direction, that is, to a portion defined on the outer peripheral surface of the sleeve 22 and exposed from the first filter 32. Thus, the first filter 32 can stably be secured on the outer peripheral surface of the sleeve 22, and in addition, the second filter 33 can stably be secured on the outer peripheral surface of the sleeve 22.

Accordingly, the two filters 32, 33 can stably be mounted on the sleeve 22. That is, in the embodiment, the two filters 32, 33 having different degrees of fineness can be secured on the outer peripheral surface of the sleeve 22 at a location where these filters 32, 33 do not overlap. Thus, the two filters 32, 33 can stably be mounted on the outer peripheral surface of the sleeve 22.

According to the embodiment, the second filter 33 is wound entirely on the outer peripheral surface of the sleeve 22 in the form of a ring (O-shaped). This conf iguration allows the both ends 33A, 33B of the second filter 33 in the circumferential direction to be secured on the outer peripheral surface of the sleeve 22 as a whole. This approach can save a securing process (procedure), compared to a case where the both ends 33A, 33B of the second filter 33 in the circumferential direction are separately secured, respectively.

In particular, according to the embodiment, the second filter 33 has a much finer component member (filtering element) than the first filter 32. Thus, even when the both ends 33A, 33B of the second filter 33 are overlapped to be secured on the outer peripheral surface of the sleeve 22 by spot welding, the second filter 33 can stably be secured on the outer peripheral surface of the sleeve 22.

According to the embodiment, the first filter 32 has coarser meshes and has higher strength than the second filter 33. Thus, the first filter 32 located on the inner diameter side can suppress deformation of the second filter 33 located on the outer diameter side when a liquid flows into the pump port 22E radially inwardly from the outside of the sleeve 22. This advantage can assure the filtering property of the second filter 33 and suppress damage to the second filter 33.

According to the embodiment, the first filter 32 and the second filter 33 are each secured on the outer peripheral surface of the sleeve 22 by welding. Thus, the first filter 32 and the second filter 33 can each stably be secured on the outer peripheral surface of the sleeve 22 by welding.

According to the embodiment, a valve body of the solenoid valve 1 (the valve portion 21) as a valve device is the spool 23. Accordingly, in a valve device (spool valve) using the spool 23 as a valve body, the plurality of filters 32, 33 can stably be mounted on the sleeve 22.

According to the embodiment, the spool 23 as a valve body is displaced with respect to the sleeve 22 by the electrically driven actuator (the solenoid portion 2). Thus, in the valve device (solenoid valve, electric-operated valve) including the electrically driven actuator (solenoid), the plurality of filters 32, 33 can stably be mounted on the sleeve 22.

In the embodiment, the case where the first filter 32 has coarser meshes and has higher strength against deformation than the second filter 33 is illustrated. However, the invention is not limited to that, and for example, the second filter may be a filter that has coarser meshes and has higher strength against deformation than the first filter. That is, the first filter and the second filter may have different properties (characteristics) in terms of the fineness (for example, filtering property, filtering precision), the strength, and the thickness of a filtering element (component member), which are opposite to those in the embodiment. In this case, the first filter and the second filter can be provided at the annular recessed portion 22J to which the tank port 22F is open so as to cover an opening of the tank port 22F, for example.

That is, the second filter serves as a reinforcing filter reinforcing the first filter on the outer diameter side of the first filter. The first filter serves as a filter preventing foreign objects from passing through the hydraulic oil on the radially inner side of the second filter as a reinforcing filter. Accordingly, the second filter can suppress deformation of the first filter on the outer diameter side when the hydraulic oil flows out of the tank port 22F radially outwardly from the inside of the sleeve 22.

As described above, in the case where the second filter has coarser meshes and has higher strength than the first filter, the second filter located on the outer diameter side can suppress deformation of the first filter located on the inner diameter side when a liquid flows out of the port radially outwardly from the inside of the sleeve. This advantage can assure the filtering property of the first filter and suppress damage to the first filter.

In the embodiment, the case where the second filter 33 is wound entirely on the outer peripheral surface of the sleeve 22 (the bottom surface of the annular recessed portion 22H) in the form of a ring (O-shaped) is illustrated. However, the invention is not limited to that, and as in a first modification shown in Fig. 10, for example, the second filter 33 may be wound on the outer periphery of the sleeve 22 in a broken ring (C-shaped).

That is, the second filter 33 may be wound on the outer peripheral surface of the sleeve 22 (the bottom surface of the annular recessed portion 22H), with part of the outer peripheral surface in the circumferential direction exposed. In this case, with the second filter 33 wound around the first filter 32 on the outer peripheral side, the both ends 33A, 33B in the circumferential direction face each other to be spaced apart in the circumferential direction. Thus, the outer peripheral surface of the sleeve 22 is exposed between the one end 33A and the other end 33B of the second filter 33 in the circumferential direction.

According to such a first modification, the second filter 33 is wound on the outer peripheral surface of the sleeve 22 (the bottom surface of the annular recessed portion 22H), with part of the outer peripheral surface in a circumferential direction exposed. Thus, in the case where an additional third filter is wound around the second filter 33 on the outer peripheral side, the third filter can stably be secured on the outer peripheral surface of the sleeve 22.

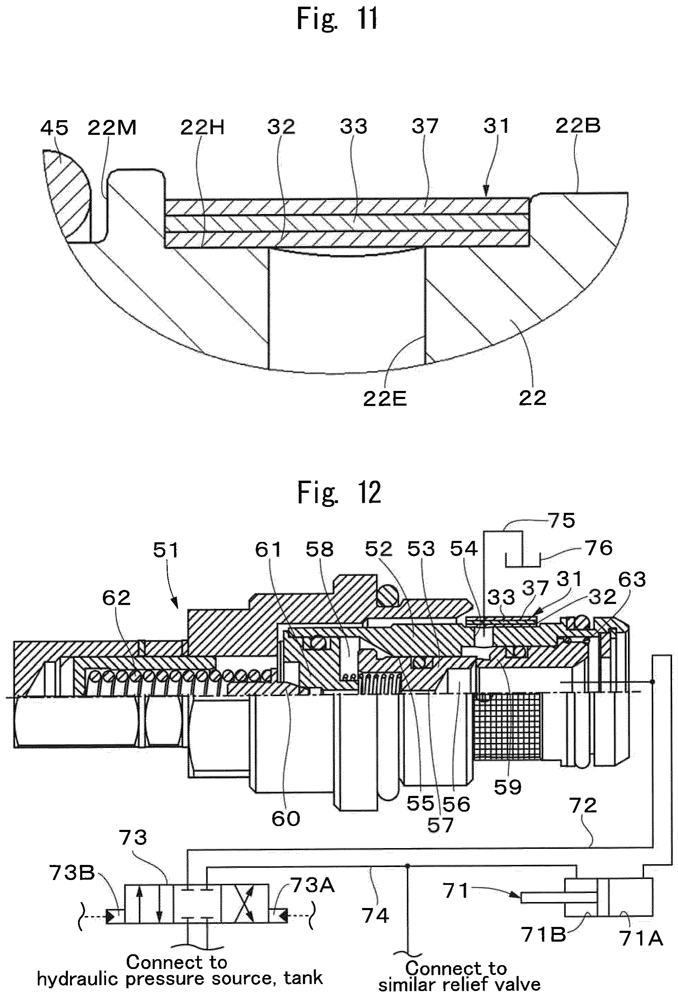

That is, in a second modification shown in Fig. 11, the filter 31 has a third filter 37, in addition to the first filter 32 and the second filter 33. In this case, the second filter 33, as in the first modification shown in Fig. 10, is wound on the outer peripheral surface of the sleeve 22, with part of the outer peripheral surface in a circumferential direction exposed. Based upon this configuration, the third filter 37 is wound around the second filter 33 on the outer peripheral side.

The third filter 37 has both ends (not shown) in the circumferential direction secured to a portion defined on the outer peripheral surface of the sleeve 22 and exposed from the first filter 32 and the second filter 33. The third filter 37 may be wound entirely on the outer peripheral surface of the sleeve 22 in the form of a ring (O-shaped). Also, the third filter 37 may be wound on the outer peripheral surface of the sleeve 22, with part of the outer peripheral surface in the circumferential direction exposed (in a broken ring, C-shaped).

In this case, the first filter 32 and the third filter 37 can each have coarser meshes and have higher strength against deformation than the second filter 33. For example, assuming that the particle diameter of trapped particles (contaminants) by the second filter 33 is 1, the particle diameter of trapped particles (contaminants) by the first filter 32 and the third filter 37 can be 2 to 5 (more preferably, 4 to 5). For example, assuming that the pressure loss of the second filter 33 is 1, the pressure loss of the first filter 32 and the third filter 37 can be 0.2 to 0.4 (more preferably, 0.25 or less).

For example, assuming that the strength of the second filter 33 is 1, the strength of the first filter 32 and the third filter 37 can be 15 to 25 (more preferably, 20 or more). For example, assuming that the thickness of the filter element of the second filter 33 is 1, the thickness of the filter element of the first filter 32 and the third filter 37 can be 2 to 5 (more preferably, 2.5 or more).

According to such a second modification, the third filter 37 wound around the first filter 32 and the second filter 33 on the outer peripheral side can secure the both ends in the circumferential direction on the outer peripheral surface of the sleeve 22 (the bottom surface of the annular recessed portion 22H) . In this case, the both ends of the third filter 37 in the circumferential direction can be secured between the both ends 33A, 33B of the second filter 33 in the circumferential direction shown in Fig. 10, that is, to a portion defined on the outer peripheral surface of the sleeve 22 and exposed from the first filter 32 and the second filter 33.

Thus, the first filter 32 and the second filter 33 can each stably be secured on the outer peripheral surface of the sleeve 22, and in addition, the third filter 37 can stably be secured on the outer peripheral surface of the sleeve 22.Accordingly, the three filters 32, 33, 37 can stably be mounted on the sleeve 22.

According to the second modification, the first filter 32 and the third filter 37 are each coarser and have higher strength than the second filter 33. Thus, the first filter 32 located on the innermost diameter side can suppress deformation of the second filter 33 when a liquid flows into the port 22E radially inwardly from the outside of the sleeve 22. Also, the third filter 37 located on the outermost diameter side can suppress deformation of the second filter 33 when a liquid flows out of the port 22E radially outwardly from the inside of the sleeve 22. This advantage, regardless of the flow direction of the liquid in the port 22E, can assure the filtering property of the second filter 33 and suppress damage to the second filter 33.

In the second modification shown in Fig. 11, the case where the three filters 32, 33, 37 cover the port 22E is illustrated. However, the invention is not limited to that, and four or more filters may be employed. In such a case, in order to secure the outer side filter disposed on the radially outermost side on the outer peripheral surface of the sleeve, remaining filters located inward of the outer side filter can be wound on the outer periphery of the sleeve in a broken ring (C-shaped).

In the second modification shown in Fig. 11, the case where the first filter 32 and the third filter 37 are each coarser and have higher strength than the second filter 33 is illustrated. However, the invention is not limited to that, and for example, the first filter may be a filter that is coarser and has higher strength than the second filter and the third filter. In addition, the third filter may be a filter that is coarser and has higher strength than the second filter and the first filter. That is, properties of each of the filters wound around the sleeve such as the fineness, the strength, the thickness, and the quality of material can be determined so as to assure filtering properties, pressure loss, strength and so on as necessary. This is also applicable to the case where four or more filters are employed.

In the embodiment, the case where the valve body of the solenoid valve 1 as a valve device is the spool 23 is illustrated. In the embodiment, the case where the valve device is defined as the solenoid valve 1 where the electrically driven solenoid portion 2 (actuator) allows the spool 23 as a valve body to be displaced with respect to the sleeve 22 is illustrated. However, the invention is not limited to that, and for example, as in a third modification shown in Fig. 12, the valve device may be a relief valve 51. That is, Fig 12 shows a third modification.

In Fig. 12, the relief valve 51 as a valve device includes a sleeve 52, a main poppet 53 as a valve body, and the filter 31. The relief valve 51 in Fig. 12 is a relief valve preventing overload of a hydraulic cylinder 71. The sleeve 52 is provided with a port 54 and a valve body hole 55 communicating with the port 54. The main poppet 53 is inserted into the valve body hole 55 of the sleeve 52. The main poppet 53 axially moves in the valve body hole 55. The filter 31 is wound around the sleeve 52 on the outer peripheral side in a circumferential direction at a position corresponding to the port 54.

The filter 31 has the first filter 32, the second filter 33, and the third filter 37. The first filter 32 and the second filter 33 are wound on the outer peripheral surface of the sleeve 52, with part of the outer peripheral surface in the circumferential direction exposed. The first filter 32 and the second filter 33 have both ends in the circumferential direction secured on the outer peripheral surface of the sleeve 52. The third filter 37 is wound around the first filter 32 and the second filter 33 on the outer peripheral side. The third filter 37 has both ends in the circumferential direction secured to a portion exposed from the first filter 32 and the second filter 33. In this case, the both ends of the third filter 37 in the circumferential direction are secured on the outer peripheral surface of the sleeve 52 between the both ends of the first filter 32 and the second filter 33 in the circumferential direction.

As shown in Fig. 12, for example, an opening of the one end side of the sleeve 52 in the axial direction (the right end side in Fig. 12) is connected to a bottom side oil passage 72 as an actuator oil passage. The bottom side oil passage 72 connects a bottom side oil chamber 71A and a directional control valve 73 of the hydraulic cylinder 71. The directional control valve 73 is switched by pilot pressure supplied to hydraulic pilot chambers 73A, 73B. Accordingly, the directional control valve 73 supplies or discharges the pressurized oil discharged from a hydraulic pressure source to the bottom side oil chamber 71A or a rod side oil chamber 71B of the hydraulic cylinder 71. Although not shown, similarly to the bottom side oil passage 72, the relief valve 51 is connected to a rod side oil passage 74 as an actuator oil passage connecting the rod side oil chamber 71B and the directional control valve 73 of the hydraulic cylinder 71.

The port 54 of the sleeve 52 is connected to a tank 76 via a tank oil passage 75. In the relief valve 51, when the pressure of a back pressure chamber 58 connected to an oil chamber 56 of the main poppet 53 via a throttle 57 as an orifice is lower than a relief set pressure, the one end side of the main poppet 53 in the axial direction (the right end side in Fig. 12) abuts (or is seated on) a cylindrical main valve seat member 59. In addition, the one end side of a pilot poppet 60 in the axial direction (the right end side in Fig. 12) abuts (or is seated on) a cylindrical pilot valve seat member 61. In this case, the bottom side oil passage 72 and the tank oil passage 75 are shut off.

On the other hand, the pilot poppet 60 is spaced apart (or separates) from the pilot valve seat member 61, when the pressure of the oil chamber 56 and the back pressure chamber 58 of the main poppet 53 increases to allow the pilot poppet 60 to be displaced against a pilot poppet spring 62 to the other side in the axial direction (the left side in Fig. 12). In conjunction therewith, the pressurized oil in the bottom side oil passage 72 is introduced to the port 54 between the main poppet 53 and the main valve seat member 59 when the main poppet 53 is spaced apart (or separates) from the main valve seat member 59 to the other side in the axial direction (the left side in Fig. 12). Accordingly, the pressurized oil in the bottom side oil passage 72 can be vented (relieved) to the tank oil passage 75.

In addition, the relief valve 51 serves as a negative pressure prevention valve of the hydraulic cylinder 71 (a hydraulic actuator). For example, the main valve seat member 59 is spaced apart from the main poppet 53 when the pressure of the tank oil passage 75 is higher than the bottom side oil passage 72 and hydraulic forces acting on the main valve seat member 59 are higher than urging forces of an urging spring 63. Thus, the hydraulic oil can be sucked from the tank 76 side to the hydraulic cylinder 71 side (the bottom side oil passage 72) through the tank oil passage 75 and the port 54. As described above, the relief valve 51 having a function of negative pressure prevention allows the direction of the hydraulic oil flowing in the port 54 to be reverse between the relief operation and the negative pressure prevention operation. That is, a bidirectional flow is generated in the port 54. In the third modification, the filter 31 has a three-layer structure composed of the first filter 32, the second filter 33 and the third filter 37.

In such a third modification, as in the embodiment, the first modification and the second modification, the plurality of filters 32, 33, 37 can stably be mounted on the sleeve 52. In particular, according to the third modification, the relief valve 51 as a valve device has a poppet (the main poppet 53) as a valve body. Accordingly, in the valve device (poppet valve) using a poppet (conical poppet, spherical poppet) as a valve body, the plurality of filters 32, 33, 37 can stably be mounted on the sleeve 52.

In the embodiment and each of the modifications, the case of the solenoid valve 1 and the case of the relief valve 51 are employed as a valve device mounting the filter 31 is illustrated. However, the invention is not limited to that, and the filter 31 in the embodiment and each of the modifications can be mounted on each type of valve device such as a pressure control valve, a flow control valve, a relief valve, and a throttle valve (a spool valve, a poppet valve). The valve device is not limited to a solenoid valve with an electrically driven actuator, and may be a valve device with no such actuator. The port covered with the filter may be a port in which a liquid flows. That is, the port covered with the filter is not limited to a pump port, a tank port or an actuator port.

The embodiment and each of the modifications are provided for illustration, and partial substitutions or combinations of configurations shown in the different embodiments and modifications are obviously possible.

### DESCRIPTION OF REFERENCE NUMERALS

1: Solenoid valve (Valve device)
2: Solenoid portion (Actuator)
21: Valve portion
22: Sleeve
22A: Sliding bore (Valve body hole)
22E: Pump port
23: Spool (Valve body)
31: Filter
32: First filter
33: Second filter
32A: One end
32B: Other end
33: Second filter
33A: One end
33B: Other end
34, 35, 36: Spot welding (Welding)
37: Third filter
51: Relief valve (Valve device)
52: Sleeve
53: Main poppet (Poppet, Valve body)
54: Port
55: Valve body hole

## Claims

1. A valve device comprising:
a sleeve provided with a port and a valve body hole communicating with the port;
a valve body inserted into the valve body hole of the sleeve and axially moving in the valve body hole; and
a filter wound around the sleeve on an outer peripheral side in a circumferential direction at a position corresponding to the port, wherein
the filter has
a first filter wound on an outer peripheral surface of the sleeve, with part of the outer peripheral surface in the circumferential direction exposed, and whose both ends in the circumferential direction are secured on the outer peripheral surface of the sleeve and
a second filter wound around the first filter on the outer peripheral side, and whose both ends in the circumferential direction are secured to a portion defined on the outer peripheral surface of the sleeve and exposed from the first filter between the both ends of the first filter in the circumferential direction.

2. The valve device according to claim 1, wherein the second filter is wound on the outer peripheral surface of the sleeve, with part of the outer peripheral surface in the circumferential direction exposed.

3. The valve device according to claim 1, wherein the second filter is wound entirely on the outer peripheral surface of the sleeve.

4. The valve device according to claim 1, wherein the first filter has coarser meshes and has higher strength than the second filter.

5. The valve device according to claim 1, wherein the second filter has coarser meshes and has higher strength than the first filter.

6. The valve device according to claim 2, wherein
the filter has
the first filter,
the second filter, and
a third filter wound around the second filter on the outer peripheral side entirely on the outer peripheral surface of the sleeve, or with part of the outer peripheral surface of the sleeve in the circumferential direction exposed, and whose both ends in the circumferential direction are secured to a portion defined on the outer peripheral surface of the sleeve and exposed from the first filter and the second filter.

7. The valve device according to claim 6, wherein the first filter and the third filter each have coarser meshes and have higher strength than the second filter.

8. The valve device according to claim 1, wherein the first filter and the second filter are each secured on the outer peripheral surface of the sleeve by welding.

9. The valve device according to claim 1, wherein the valve body is a spool or a poppet.

10. The valve device according to claim 1, wherein the valve body is displaced with respect to the sleeve by an electrically driven actuator.
